# EUROPÄISCHE PATENTSCHRIFT

(11) **EP 2 569 360 B1**
(45) Veröffentlichungstag und Bekanntmachung des Hinweises auf die Patenterteilung: **22.02.2017**
(21) Anmeldenummer: 11717285.8
(22) Anmeldetag: 06.05.2011
(51) Int. Cl.: C08K 5/13, C08K 5/50, C08K 5/526, C08L 69/00

(54) **STABILISATORZUSAMMENSETZUNGEN**
STABILISER COMPOSITIONS
COMPOSITIONS STABILISANTES

(30) Priorität: 10.05.2010 IT RM20100226
(43) Veröffentlichungstag der Anmeldung: 20.03.2013
(73) Patentinhaber: Covestro Deutschland AG, 51373 Leverkusen (DE)
(72) Erfinder: MEYER, Alexander, 40489 Düsseldorf (DE); SCHINNER, Marc, 57632 Ziegenhain (DE); WAGNER, Michael, 47443 Moers (DE)
(74) Vertreter: Levpat
(86) Internationale Anmeldenummer: PCT/EP2011/057277
(87) Internationale Veröffentlichungsnummer: WO 2011/141365

(56) Entgegenhaltungen:
- EP-A1- 2 009 057
- GB-A- 1 467 901
- US-A1- 2003 187 111
- US-A1- 2006 251 996
- US-A1- 2008 026 205

## Beschreibung

Die Erfindung betrifft Stabilisator-Kombinationen zur Stabilisierung von Cäsiumwolframat (IR-Absorber) in Wärme-absorbierenden Polymer-Zusammensetzungen auf Basis transparenter thermoplastischer Kunststoffe, sowie die Verwendung der Polymer-Zusammensetzungen zur Herstellung von Platten, Automobil-, Schienenfahrzeug-, Luftfahrzeug- und Architekturverscheibungen.

Verscheibungen aus Zusammensetzungen, enthaltend transparente thermoplastische Polymere wie z.B. Polycarbonat, bieten für den Fahrzeugbereich und für Gebäude viele Vorteile gegenüber herkömmlichen Verscheibungen aus Glas. Hierzu zählen z.B. erhöhte Bruchsicherheit oder Gewichtsersparnis, die im Fall von Automobilverscheibungen eine höhere Insassensicherheit bei Verkehrsunfällen und einen niedrigeren Kraftstoffverbrauch ermöglichen. Schließlich lassen transparente Werkstoffe, die transparente thermoplastische Polymere enthalten, aufgrund der einfacheren Formbarkeit eine wesentlich größere Designfreiheit zu.

Nachteilig ist allerdings, daß die hohe Wärmedurchlässigkeit (d.h. Durchlässigkeit für IR-Strahlung) von transparenten thermoplastischen Polymeren bei Sonneneinwirkung zu einer unerwünschten Erwärmung im Inneren von Fahrzeugen und Gebäuden führt. Die erhöhten Temperaturen im Innenraum vermindern den Komfort für die Insassen bzw. Bewohner und können erhöhte Anforderungen an die Klimatisierung nach sich ziehen, die wiederum den Energieverbrauch steigern und so die positiven Effekte wieder aufheben. Um dennoch der Forderung nach einem geringen Energieverbrauch verbunden mit einem hohen Insassenkomfort Rechnung zu tragen, sind Scheiben erforderlich, die mit einem entsprechenden Wärmeschutz ausgerüstet sind und dieser über einen langen Anwendungszeitraum gewährleistet ist. Dies gilt insbesondere für den Automobilbereich.

Wie seit langem bekannt ist, entfällt der größte Teil der solaren Energie neben dem sichtbaren Bereich des Lichts zwischen 400 nm und 750 nm auf den Bereich des nahen Infrarots (NIR) zwischen 750 nm und 2500 nm. Eindringende Sonnenstrahlung wird z.B. im Inneren eines Automobils absorbiert und als langwellige Wärmestrahlung mit einer Wellenlänge von 5 µm bis 15 µm emittiert. Da in diesem Bereich übliche Verscheibungsmaterialien -insbesondere im sichtbaren Bereich transparente thermoplastische Polymere - nicht transparent sind, kann die Wärmestrahlung nicht nach außen abstrahlen. Man erhält einen Treibhauseffekt und der Innenraum heizt sich auf. Um diesen Effekt möglichst klein zu halten, sollte daher die Transmission der Verscheibungen im NIR möglichst minimiert werden. Übliche transparente thermoplastische Polymere wie z.B. Polycarbonat sind jedoch sowohl im sichtbaren Bereich, als auch im NIR transparent.

Es werden daher z.B. Zusätze benötigt, welche im NIR eine möglichst geringe Transparenz aufweisen ohne die Transparenz im sichtbaren Bereich des Spektrums nachteilig zu beeinflussen.

Unter den transparenten thermoplastischen Kunststoffen sind Polymere basierend auf Polymethylmethacrylat (PMMA) und Polycarbonat besonders gut für die Verwendung als Verscheibungsmaterial geeignet. Aufgrund der hohen Zähigkeit besitzt insbesondere Polycarbonat ein sehr gutes Eigenschaftsprofil für derartige Einsatzzwecke.

Um diesen Kunststoffen Wärme-absorbierende Eigenschaften zu verleihen werden daher entsprechende Infrarotabsorber als Additive eingesetzt. Insbesondere sind hierfür IR-Absorber-Systeme interessant, die über ein breites Absorptionsspektrum im NIR-Bereich (Nahes Infrarot, 750 nm - 2500 nm) bei gleichzeitig geringer Absorption im sichtbaren Bereich (geringe Eigenfarbe) verfügen. Die entsprechenden Polymer-Zusammensetzungen sollen darüber hinaus eine hohe Thermostabilität sowie eine ausgezeichnete Lichtstabilität aufweisen.

Es ist eine Vielzahl von IR-Absorbern auf Basis organischer oder anorganischer Materialien bekannt, die in transparenten Thermoplasten eingesetzt werden können. Eine Auswahl derartiger Materialien ist z.B. in J. Fabian, H. Nakazumi, H. Matsuoka, Chem. Rev. 92, 1197 (1992), in US-A 5,712,332 oder JP-A 06240146 beschrieben.

IR-absobierende Additive, insbesondere solche auf Basis organischer Materialien, haben allerdings häufig den Nachteil, dass sie eine geringe Stabilität gegenüber thermischer Belastung oder Bestrahlung aufweisen. So sind viele dieser Additive nicht genügend wärmestabil, um in transparente Thermoplaste eingearbeitet zu werden, da bei ihrer Verarbeitung Temperaturen bis zu 350°C erforderlich sind.

Darüber hinaus sind die Verscheibungen im Gebrauch oft über längere Zeiträume Temperaturen von mehr als 50°C, bedingt durch die Sonneneinstrahlung, ausgesetzt, was zur Zersetzung oder zum Abbau der IR-absorbierenden Additive (IR-Absorber) führen kann.

Auch wenn IR-absorbierende Additive auf Basis anorganischer Materialien im Vergleich zu organischen Additiven häufig deutlich stabiler sind, weisen auch diese einen deutlichen Abbau der Absorberleistung über die Zeit, insbesondere bei hoher thermischer Belastung, d.h. bei Temperaturen > 50° C über einen längeren Zeitraum auf. Im Fall von Gebäude und Automobilverscheibungen sind hier summierte Expositionszeiten von Tagen, Wochen oder sogar Jahren zu berücksichtigen. Die Tatsache, dass IR-Absorber auf Basis anorganischer Materialien, bei thermischer Belastung ein instabiles Verhalten aufweisen war überraschend, da der Fachmann grundsätzlich davon ausgeht, dass anorganische Systeme auf Metalloxid oder Boridbasis eine hohe thermische Stabilität aufweisen.

Als anorganische IR-Absorber haben sich Materialien auf Basis feinteiliger Boride, wie z.B. Lanthanhexaborid, etabliert, da sie über eine breite Absorptionsbande verfügen. Derartige Boride auf Basis von La, Ce, Pr, Nd, Tb, Dy, Ho, Y, Sm, Eu, ER, Tm, Yb, Lu, Sr, Ti, Zr, Hf, V, Ta, Cr, Mo, W und Ca sind z.B. in DE 10392543 oder EP 1 559 743 beschrieben.

Ferner sind IR-absorbierende Additive aus der Gruppe der Wolframverbindungen bekannt, die über eine im Vergleich zu den aus dem Stand der Technik bekannten anorganischen IR-Absorbern auf Borid-Basis geringere Eigenabsorption im sichtbaren Spektralbereich verfügen, wobei insbesondere Zink-dotierte Wolframverbindungen mit erhöhter Langzeitstabilität bevorzugt verwendet werden.

Im Sinne der Erfindung wird besonders der anorganische IR-Absorber Cäsiumwolframat von der vorliegenden Stabilisatorkombination stabilisiert, auch Zink-dotierte Cäsiumwolframate.

Die Herstellung und der Einsatz dieser Absorber in thermoplastischen Materialien werden beispielsweise in H. Takeda, K. Adachi, J. Am. Ceram. Soc. 90, 4059 - 4061, (2007), WO 2005037932, JP 2006219662, JP 2008024902, JP 2008150548, WO 2009/059901 und JP 2008214596 beschrieben.

Darüber hinaus war bekannt, in thermoplastischen Materialien zur Verbesserung der Verarbeitungseigenschaften Thermostabilisatoren wie beispielsweise Phosphite, gehinderte Phenole, aromatische, aliphatische oder aliphatisch-aromatische Phosphine, Lactone, Thioether und gehinderte Amine (HALS, Hindered Amine Light Stabilizers) zu verwenden.

Aus der WO-A 01/18101 sind Formmassen enthaltend einen thermoplastischen Kunststoff und einen Phthalo- oder Naphthalocyanin-Farbstoff bekannt, die zur Verbesserung der Verarbeitungsstabilität Antioxidantien wie Phosphite, gehinderte Phenole, aromatische, aliphatische oder gemischte Phosphine, Lactone, Thioether und gehinderte Amine enthalten können.

Bei allen bislang publizierten thermoplastischen Zusammensetzungen mit IR-Absorbern dient der Thermostabilisator aber ausschließlich zur Stabilisierung der jeweiligen Polymermatrix - insbesondere bei der Verarbeitung. So lässt sich durch Einsatz dieser Systeme die Gelbfärbung des Polycarbonats nach Belichtung, wie in EP 1266931 beschrieben, begrenzen.

Bei allen vorgenannten IR-Absorbern, auch in Kombination mit jeweils üblichen Stabilisatoren, hat sich allerdings gezeigt, daß die Langzeitstabilität bei thermischer Belastung, wie sie im Lebenszyklus der Materialien vorkommt, unzureichend ist.

Dieses gilt nicht nur für die organischen, sondern auch für die anorganischen IR-Absorber in einer transparenten, thermoplastischen Polymermatrix, so daß nach Thermolagerung bei erhöhter Temperatur der entsprechenden Polymer-Zusammensetzungen, wie z.B. einer Polycarbonat-Zusammensetzung, die Absorption im IR-Bereich signifikant nachlässt.

Für eine Anwendung der Zusammensetzungen im Glazing-Bereich, insbesondere für Autoverscheibungen, ist es jedoch unbedingt erforderlich, dass die entsprechenden IR-absorbierenden Polymerzusammensetzungen eine Langzeitstabilität gegen höhere Temperaturen aufweisen. Mit höheren Temperaturen sind z.B. Temperaturen gemeint, die ein Artikel aus Polycarbonat bei intensiver Sonneneinstrahlung annehmen kann (z.B. 50°C - 110°C). Ferner muss gewährleistet sein, dass sich die Zusammensetzung unter herkömmlichen Prozessbedingungen verarbeiten lassen, ohne dass schon hierdurch die IR-absorbierenden Eigenschaften vermindert werden.

Aus der DE 10 2009 058200 war bekannt, daß IR-Absorber auf Cäsiumwolframatbasis in thermoplastischer Matrix durch Zugabe von Triphenylphosphin stabilisiert werden können. Allerdings zeigt sich auch mit diesem Stabilisator ein starker Abbau der Stabilisatorleistung im Langzeitversuch bei einer Temperatur von 120°C.

Die Aufgabe der vorliegenden Erfindung war es, Stabilisatoren bereitzustellen, die die Langzeitstabilität bekannter IR-Absorber, insbesondere anorganischer IR-Absorber, deutlich verbessern, sowie die Bereitstellung von Zusammensetzungen mit langzeitstabilisiertem IR-Absorber.

Überraschenderweise zeigte sich, dass der anorganische IR-Absorber Cäsiumwolframat in thermoplastischen Zusammensetzungen durch eine Stabilisator-Kombination enthaltend mindestens einen Stabilisator auf Phosphinbasis, mindestens einen Stabilisator auf Phosphitbasis und mindestens einen Stabilisator aus der Gruppe der phenolischen Antioxidantien besonders gut stabilisiert wird.

Phosphine im Sinne der vorliegenden Erfindung leiten sich von Verbindungen des allgemeinen Typs PₙHₙ₊₂, insbesondere von PH₃ ab, wobei bevorzugt alle Wasserstoffatome gegen aliphatische und/oder aromatische Kohlenwasserstoffreste ersetzt sind, wobei die aromatischen Kohlenwasserstoffreste weitere Substituenten wie zum Beispiel Alkylgruppen aufweisen können.. Die Phosphine können hierbei ein Phosphor-Atom aufweisen oder aber mehrere, über entsprechende aliphatische und/oder aromatische Kohlenwasserstoffe verbrückte Phosphor-Atome.

Unter Phosphiten im Sinne der vorliegenden Erfindung sollen Ester der Phosphonsäure (oft auch als Phosphorigsäureester bezeichnet) mit der allgemeinen Strukur P(OR)₃ verstanden sein, wobei R für aliphatische und/oder aromatische Kohlenwasserstoffreste steht, wobei die aromatischen Kohlenwasserstoffreste weitere Substituenten wie zum Beispiel Alkylgruppen aufweisen können.

Unter Phosphonaten sollen von der Grundstuktur R-PO(OH)₂ abgeleitet Verbindungen verstanden sein, wobei R für aliphatische und/oder aromatische Kohlenwasserstoffreste steht, wobei die aromatischen Kohlenwasserstoffreste weitere Substituenten wie zum Beispiel Alkylgruppen aufweisen können. Die OH-Gruppen der Grundstruktur können teilweise oder vollständig zu OR-Funktionalitäten, wobei R wiederum für aliphatische und/oder aromatische Kohlenwasserstoffreste steht, wobei die aromatischen Kohlenwasserstoffreste weitere Substituenten wie zum Beispiel Alkylgruppen aufweisen können, verestert oder teilweise oder vollständig deprotoniert sein, wobei die negative Gesamtladung durch ein entsprechendes Gegenion ausgeglichen wird.

Unter Phosphoniten im Sinne der vorliegenden Erfindung sollen Ester, insbesondere Diester der Phosphonigen Säure vom Typ R-P(OR)₂ verstanden sein, wobei R für aliphatische und/oder aromatische Kohlenwasserstoffreste steht, wobei die aromatischen Kohlenwasserstoffreste weitere Substituenten wie zum Beispiel Alkylgruppen aufweisen können. Die Phosphonite können hierbei ein Phosphor-Atom aufweisen oder aber mehrere, über entsprechende aliphatische und/oder aromatische Kohlenwasserstoffe verbrückte Phosphor-Atome.

Im Rahmen der vorliegenden Erfindungen sollen unter Phosphaten Salze, Teil- bzw. Vollester und Kondensate der Phosphorsäure (H₃PO₄) verstanden sein.

Hinsichtlich der Auswahl der Phosphine liegen keine Beschränkungen vor, wobei die Phosphinverbindungen bevorzugt aus der Gruppe ausgewählt sind, die aliphatische Phosphine, aromatische Phosphine und aliphatisch-aromatische Phosphine umfasst.

Die Phosphinverbindungen können primäre, sekundäre und tertiäre Phosphine sein. Bevorzugt werden tertiäre Phosphine eingesetzt, wobei aromatische Phosphine besonders bevorzugt und tertiäre aromatische Phosphine ganz besonders bevorzugt sind.

In einer bevorzugten Ausführungsform der vorliegenden Erfindung werden Triphenylphosphin (TPP), Trialkylphenylphosphin, Bisdiphenylphosphino-ethan oder ein Trinaphthylphosphin, wovon Triphenylphosphin (TPP) ganz besonders bevorzugt ist, oder Mischungen dieser Phosphine eingesetzt.

Grundsätzlich können Mischungen aus verschiedenen Phosphinen eingesetzt werden.

In einer Ausführungsform wird der erfindungemäße IR-Absorber vor der Einarbeitung in die thermoplastische Polymermatrix mit der erfindungsgemäßen Stabilisatorkombination vermischt. Die Herstellung und Eigenschaften von Phosphinverbindungen sind dem Fachmann bekannt und beispielsweise in der EP-A 0 718 354 und "Ullmanns Enzyklopädie der Technischen Chemie", 4. Aufl., Bd. 18, S. 378-398 und Kirk-Othmer, 3. Aufl., Bd. 17, S. 527-534 beschrieben.

Bei der Einsatzmenge der Phosphinverbindung in der Stabilisatormischung ist zu berücksichtigen, dass unter bestimmten Verarbeitungsbedingungen in Abhängigkeit von Temperatur und Verweilzeit die Substanz oxidiert wird. Der oxidierte Anteil steht nicht mehr zur Stabilisierung der eingesetzten IR-Absorber zur Verfügung. Deshalb sind die Zahl der Verarbeitungsschritte und die jeweiligen Prozessbedingungen zu berücksichtigen. Die Zusammensetzung enthält also nach thermischer Verarbeitung auch immer bestimmte Mengen an oxidiertem Phosphin, insbesondere bevorzugt Triphenylphosphinoxid.

Kommerziell erhältliche geeignete Phosphitstabilisatoren im Rahmen der vorliegenden Erfindung sind beispielsweise Irgafos® 168 (Tris(2,4-di-tert-butyl-phenyl)-phosphit / CAS-Nr. 31570-04-4), Irgafos® TPP (CAS-Nr. 101-02-0) und Irgafos® TNPP (CAS-Nr. 26523-78-4), wobei Irgafos® 168 besonders bevorzugt ist.

Kommerziell erhältliche geeignete phenolische Antioxidantien sind beispielsweise Irganox® 1076 (CAS-Nr. 2082-79-3 / 2,6-Di-tert-butyl-4-(octadecanoxycarbonylethyl)phenol) und Irganox® 1010 (CAS-Nr. 6683-19-8).

In einer bevorzugten Ausführungsform besteht die Stabilisatorkombination aus Triphenylphosphin sowie Irgafos 168® und Irganox 1076®.

Alternativ zu Irganox 1076® kann Irganox® 1010 (Pentaerythrit- 3-(4-hydroxy-3,5-di-tert-butylphenyl)propionat; CAS-Nr.: 6683-19-8) verwendet werden.

Der Anteil der Stabilisatorkombination in der Gesamtzusammensetzung ist 0,001 Gew.% - 0,500 Gew.%, vorzugsweise 0,005 Gew.% - 0,250 Gew.%, weiter bevorzugt 0,010 Gew.% - 0,150 Gew.%, und besonders bevorzugt 0,015 Gew.% - 0,125 Gew.%, bezogen auf das Gesamtgewicht der Zusammensetzung.

Die Stabilisatorkombination enthält
a) 30 Gew.% -67 Gew.% mindestens eines Phosphinstabilisators,
b) 30 Gew.% -67 Gew.% mindestens eines Phosphitstabilisators, und
c) 2 Gew.% - 20 Gew.% mindestens eines phenolischen Antioxidanz,
wobei sich die Summe der Komponenten a)-c) zu 100 addiert.

Bevorzugt liegt die Menge an nicht oxidiertem Phosphinstabilisator im Endprodukt bei >0,01 Gew.-%, weiter bevorzugt bei > 0,02 Gew.-%.

In einer bevorzugten Ausführungsform ist das Verhältnis von Phosphit-Stabilisator zu phenolischem Antioxidanz von 1: 5 bis 10:1, weiter bevorzugt von 1:5 bis 5:1 und besonders bevorzugt 4:1.

In einer weiteren bevorzugten Ausführungsform beträgt das Verhältnis von Phosphin (a) zum Gemisch aus Phosphit und phenolischen Antioxidanz (b+c) bevorzugt 8: 1 bis 1 : 9, weiter bevorzugt 1:5 bis 5:1 wobei das Verhältnis von Phosphit-Stabilisator (b) zu phenolischem Antioxidanz (c) von 1: 5 bis 10:1, weiter bevorzugt von 1:5 bis 5:1 und besonders bevorzugt 4:1 beträgt.

Um die thermoplastische Matrix zu stabilisieren, können neben der erfindungsgemäßen, zur Stabilisierung des IR-Absorbers eingesetzten Kombination weitere Phosphor-basierte Stabilisatoren eingesetzt werden, solange diese den Effekt der oben beschriebenen Stabilisierung nicht negativ beeinflussen.

In einer besonderen Ausführungsform enthält die Zusammensetzung neben den genannten Phosphinen, Phosphiten und phenolischen Antioxidantien auch Lacton-basierte Radikalfänger wie HP136 (CAS: 181314-48-7)

Während die oben genannten Stabilisatoren offensichtlich stabilisierend auf IR-Absorber, bevorzugt anorganische IR-Absorber wirken, hat sich überraschenderweise herausgestellt, daß Phosphate, Phosphorsäure, Phosphorsäurederivate oder entsprechende Stabilisatoren, die diese Verbindungen beinhalten oder bilden können, zu einer schnelleren Schädigung der erfindungsgemäßen IR-Absorber und somit zu einem Abfall der IR-Absorption führen.

Bei den Cäsiumwolframaten handelt es sich um anorganische IR Absorber aus der Gruppe der Wolframverbindungen vom Typ MxWyOz ( x/y = 0,001-1,000; z/y = 2,2-3,0), mit M gleich Cs. Besonders bevorzugt ist Cs_{0,33}WO₃. In einer besonderen Ausführungsform der vorliegenden Erfindung ist die alleinige Verwendung von Cs_{0,33}WO₃ als anorganischem IR Absorber ganz besonders bevorzugt. Ebenfalls bevorzugt sind Cs/W-Verhältnisse von 0,20 und 0,25, wobei die vorgenannten Wolframverbindungen nachfolgend als Wolframate bezeichnet werden;

Das IR-absorbierende anorganische Wolframat wird bevorzugt in organischer Matrix dispergiert. Bevorzugt werden die Wolframate in einer Menge von 0,0075 Gew% - 0,0750 Gew.-%, bevorzugt 0,0100 Gew% - 0,0500 Gew.-% und besonders bevorzugt 0,0125 Gew% - 0,0375 Gew.-% berechnet als Feststoffanteil an Wolframat in der Polymer-Gesamtzusammensetzung eingesetzt. Feststoffanteil an Wolframat meint in diesem Zusammenhang das Wolframat als Reinstoff und nicht eine Suspension oder andere Zubereitung, enthaltend den Reinstoff.

In einer besonderen Ausführungsform der vorliegenden Erfindung zeigte sich völlig überraschend, dass es einen besonders ausgeprägten synergistischen Effekt insbesondere zwischen Zink-dotiertem Cäsiumwolframat und der Kombination von Phosphin, Phosphit und phenolischem Antioxidanz mit Blick auf die Langzeitstabilität des Wolframats bei erhöhter Temperatur (120°C) gibt. Dies war vollkommen überraschend und konnte nicht erwartet werden.

Bei diesen speziellen dotierten Wolframaten handelt es sich um Substanzen vom Typ Zn_{w}MxWyOz ( x/y = 0,001-1,000; z/y = 2,2-3,0; w = 0,001 - 0,015), mit M gleich Cs. Weiterhin besonders bevorzugt ist Zink-dotiertes Cs_{0,33}WO₃.

In einer besonderen Ausführungsform der vorliegenden Erfindung ist die alleinige Verwendung von Zn_{w}Cs_{0,33}WO₃ (mit w = 0,001 - 0,015) als anorganischem IR Absorber ganz besonders bevorzugt. Ebenfalls bekannt sind Verbindungen mit Cs/W-Verhältnissen von 0,20 bis 0,25. Weiterhin überraschend stellte sich dabei heraus, dass nur bestimmte Gruppen von Stabilisatoren synergistisch wirksam sind, wohingegen andere, ähnlich aufgebaute Stabilisatoren entweder wirkungslos oder sogar schädlich sind und die Abnahme der IR-Absorption sogar noch beschleunigen. Im Rahmen der vorliegenden Erfindung konnte so gezeigt werden, dass sich Phosphor-basierte Stabilisatoren in Form ihrer Phosphine in Kombination mit anderen Stabilisatoren als positiv erweisen und die IR-Absorber stabilisieren, wohingegen die alleinige Verwendung Phosphor-haltiger Stabilisatoren vom Typ der Phosphite, Phosphonate oder Phosphoniten sich als kaum wirksam bis wirkungslos erweist. Bei der Verwendung von Phosphaten, Phosphorsäure, Phosphorsäurederivaten oder entsprechenden Stabilisatoren, die diese Verbindungen beinhalten oder bilden können, kommt es sogar zu einer schnelleren Schädigung der IR-Absorber. Auch in Kombination mit den erfindungsgemäßen IR-Absorbern können diese von Phosphaten, Phosphorsäure und Phosphorsäurederivaten abgeleiteten Verbindungen die Stabilität der IR-Absorber negativ beeinflussen.

Insbesondere konnte gezeigt werden, dass die Kombination von Zink-dotierten Wolframaten mit Triphenylphosphin, Phosphit und phenolischem Antioxidanz zu besonders vorteilhaften Eigenschaften führt.

Die Aufgabe der vorliegenden Erfindung wird somit durch eine Zusammensetzung gemäß Anspruch 1 gelöst, wobei auch Zink-dotierte Cäsiumwolframate, weiter bevorzugt Zn_{w}Cs_{0,33}WO₃ (w = 0,001-0,015) umfaßt sind.

Dabei ist das Phosphin vorzugsweise Triphenylphosphin (TPP), Trialkylphenylphosphin, Trinaphthylphosphin oder Bisdiphenylphosphinoethan, wobei Triphenylphosphin (TPP) besonders bevorzugt ist, das Phosphit bevorzugt Irgafos® 168 (Tris(2,4-di-tert-butyl-phenyl)-phosphit / CAS-Nr. 31570-04-4), Irgafos® TPP (CAS-Nr. 101-02-0) oder Irgafos® TNPP (CAS-Nr. 26523-78-4), wobei Irgafos® 168 besonders bevorzugt ist, das phenolische Antioxidanz bevorzugt Irganox® 1076 (2,6-Di-tert-butyl-4-(octadecanoxycarbonylethyl)phenol) oder Irganox® 1010 (CAS-Nr. 6683-19-8).

Die erfindungsgemäße Zusammensetzung enthält optional einen transparenten thermoplastischen Kunststoff, bevorzugt Polycarbonat, Copolycarbonat, Polystyrol, Styrol-Copolymer, aromatische Polyester wie Polyethylenterephthalat (PET), PET-Cyclohexandimethanol-Copolymer (PETG), Polyethylennaphthalat (PEN), Polybutylenterephthalat (PBT), cyclisches Polyolefin, Poly- oder Copolymethylmethacrylate wie Polymethylmethacrylat, weiter bevorzugt Polycarbonat, Copolycarbonat aromatische Polyester oder Polymethylmethacrylat, oder Mischungen der genannten Komponenten, und besonders bevorzugt Polycarbonat und Copolycarbonat.

In einer bevorzugten Ausführungsform ist das Verhältnis bei Einsatz eines Zink-dotierten Wolframats von Zinkoxid zu Cs_{0,33}WO₃ in der Komponente A) 22,6 zu 76,4 Gew.-%.

Der Anteil der Stabilisatorkombination in der Gesamtzusammensetzung ist vorzugsweise 0,001 Gew.% - 0,500 Gew.%, weiter bevorzugt 0,005 Gew.% - 0,250 Gew.%, noch weiter bevorzugt 0,01 Gew.% - 0,15 Gew.%, und besonders bevorzugt 0,015 Gew.% - 0,125 Gew.%, bezogen auf das Gesamtgewicht der Zusammensetzung.

Der Partikeldurchmesser des IR-Absorbers ist vorzugsweise kleiner als 200 nm, weiter bevorzugt kleiner als 100 nm und stärker bevorzugt kleiner als 50 nm, wobei der Partikeldurchmesser jeweils bevorzugt größer als 5 nm, weiter bevorzugt größer als 10 nm ist. In einer besonders bevorzugten Ausführungsform ist der durchschnittliche Teilchendurchmesser zwischen 15 nm bis 25 nm. Die Partikel sind im sichtbaren Bereich des Spektrums durchlässig, wobei durchlässig bedeutet, dass die Absorption dieser IR-Absorber im sichtbaren Bereich des Lichts verglichen mit der Absorption im IR-Bereich gering ist und der IR-Absorber zu keiner deutlich erhöhten Trübung oder deutlichen Verminderung der Transmission (im sichtbaren Bereich des Lichts) der Zusammensetzung oder des jeweiligen Endproduktes führt.

Die eingesetzten Wolframate weisen eine amorphe, eine kubische, tetragonale oder hexagonale Wolfram-Bronze Struktur auf. Die Herstellung von dotierten Wolframaten ist in WO2005037932 beschrieben.

Zur Herstellung derartiger Materialien werden z.B. Wolframtrioxid, Wolframdioxid, ein Hydrat eines Wolframoxids, Wolframhexachlorid, Ammoniumwolframat oder Wolframsäure und ein Zinksalz, vorzugsweise Zinkoxid, und mindestens ein weiteres Salz enthaltend das Element M, wie z.B. Cäsiumcarbonat, in bestimmten stöchiometrischen Verhältnisse gemischt, so dass die molaren Verhältnisse der einzelnen Komponenten durch die Formel Zn_{w}M_{y}WO₃ (w = 0,001-0,015) wiedergegeben werden. Diese Mischung wird anschließend bei Temperaturen zwischen 100 °C und 850 °C in einer reduzierenden Atmosphäre, z.B. einer Argon-Wasserstoff-Atmosphäre, behandelt und abschließend das erhaltene Pulver bei Temperaturen zwischen 550 °C und 1200 °C unter Inertgasatmosphäre getempert.

Anorganische IR-Absorber auf Boridbasis in Form von feinteiligen Partikeln sind hier ebenfalls beschrieben. Die Herstellung kann z.B. aus Oxiden der Seltenen Erden wie z.B. X2O3 (mit X z.B. = La, Ce, Pr, Nd, Gd) und z.B. Borcarbiden (B4C) erfolgen in dem diese Verbindungen gemischt und im Vakuum bei hohen Temperaturen, wie z.B. 1500 °C für einige Stunden, wie z.B. 3 Stunden, getempert werden. Man erhält das Borid in Form eines Pulvers. Bezüglich der Form der feinteiligen Partikel gibt es keinerlei Beschränkung - so können die Partikel eine spärische, Plättchen-artige, irreguläre oder nadelförmige Form aufweisen. Die Absorptionsfähigkeit von IR-Strahlung ist umso größer, je kristalliner die Boridpartikel sind. Jedoch weisen auch Partikel mit einer niedrigen Kristallinität (z.B. gekennzeichnet durch einen breiten Beugungspeak im Röntgenbeugungsexperiment) eine im Sinne der Erfindung ausreichende IR-Absorptionseigenschaft auf. Dies ist allerdings nur der Fall, solange die Partikel im Inneren eine Bindung aus dem verwendetem Metall und Bor aufweisen. Die Farbe der Partikel im Pulver kann z.B. gräulich-schwarz, bräunlich-schwarz, grünlich-schwarz oder dergleichen sein.

Die Oberfläche der Partikel kann behandelt sein. So kann die Oberfläche mit einem Silan behandelt oder mit einer Titan-basierten, Zirkonium-basierten Schicht oder ähnlichen Schichten versehen sein. Durch diese Behandlung kann die Widerstandsfähigkeit gegen Feuchtigkeit erhöht werden. Diese Art von Beschichtung erhöht die Langzeitstabilität bezüglich der IR-Absorption und ist z.B. in US20050161642 beschrieben.

Neben den Partikeln auf Boridbasis können - allerdings nicht notwendigerweise - weitere Partikel auf Basis von SiO₂, TiO₂, ZrO₂, Al₂O₃ oder MgO vorliegen. Diese Partikel liegen bevorzugt in einer Größe von kleiner als 200 nm vor.

In der vorliegenden Erfindung werden die feinteiligen IR-Absorber Partikel in Form einer Dispersion in die Polymermatrix eingebracht. Diese Dispersion verhindert die Reaglomeration und erleichtert die Einarbeitung in eine thermoplastische Matrix wie z.B. Polycarbonat. Polymerartige Dispergiermittel werden bevorzugt eingesetzt. Geeignete Polymer-basierte Dispergiermittel sind vor allem Dispergiermittel, die eine hohe Lichttransmission aufweisen, wie z.B. Polyacrylate, Polyurethane, Polyether oder Polyester sowie davon abgeleitete Polymere. Als Dispergiermittel bevorzugt sind Polyacrylate, Polyether und Polyester-basierte Polymere. Bevorzugt werden hochtemperaturstabile Dispergiermittel eingesetzt.

Zur Herstellung der erfindungsgemäßen anorganischen IR-Absorber Nanopartikel kann der IR-Absorber mit den unten beschriebenen Dispergiermitteln und weiteren organischen Lösemitteln, wie z.B. Toluol, Benzol oder ähnliche aromatische Kohlenwasserstoffe vermischt und in geeigneten Mühlen, wie z.B. Kugelmühlen, unter Zugabe von Zirkoniumoxid (z.B. mit einem Durchmesser von 0,3 mm) gemahlen werden, um die gewünschte Partikelgrößenverteilung herzustellen. Man erhält die Nanopartikel in Form einer Dispersion. Nach Mahlung können gegebenenfalls weitere Dispergiermittel zugesetzt werden. Das Lösungsmittel wird bei erhöhten Temperaturen und reduziertem Druck entfernt.

Die Größe der Partikel kann mit Hilfe der Transmissionselektronenspektroskopie (TEM) bestimmt werden. Derartige Messungen an IR-Absorber-Nanopartikeln sind z.B. in Adachi et al., J. Am. Ceram. Soc. 2008, 91, 2897-2902, beschrieben.

Für den Einsatz in transparenten Thermoplasten werden die so erhaltenen Partikel in einer organischen Matrix dispergiert, z.B. in einem Acrylat, und ggf. wie oben beschrieben in einer Mühle unter Verwendung geeigneter Hilfsstoffe wie z.B. Zirkoniumdioxid und ggf. unter Verwendung von organischen Lösungsmitteln wie zum Beispiel Toluol, Benzol oder ähnlichen Kohlenwasserstoffen gemahlen.

Geeignete Polymer-basierte Dispergiermittel sind vor allem Dispergiermittel, die eine hohe Lichttransmission aufweisen, wie z.B. Polyacrylate, Polyurethane, Polyether, Polyester oder Polyesterurethane sowie davon abgeleitete Polymere.

Als Dispergiermittel bevorzugt sind Polyacrylate, Polyether und Polyester-basierte Polymere, wobei als hochtemperaturstabile Dispergiermittel Polyacrylate wie z.B. Polymethylmethacrylat oder Polymethylacrylat (zusammen benannt als Polymethyl(meth)acrylat) und Polyester besonders bevorzugt sind. Es können auch Mischungen dieser Polymere oder auch Copolymere auf Acrylatbasis eingesetzt werden. Derartige Dispergierhilfsmittel und Methoden zur Herstellung von Wolframatdispersionen sind z.B. in der JP 2008214596 sowie in Adachi et al. J. Am. Ceram. Soc. 2007, 90 4059- 4061, beschrieben.

Für die vorliegende Erfindung geeignete Dispergiermittel sind kommerziell erhältlich. Insbesondere sind Dispergiermittel auf Polyacrylat-Basis geeignet. Derart geeignete Dispergiermittel sind z.B. unter den Handelsnamen EFKA^{®}, z.B. EFKA^{®} 4500 und EFKA^{®} 4530 bei Ciba Specialty Chemicals erhältlich. Polyesterhaltige Dispergiermittel sind ebenfalls geeignet. Sie sind beispielsweise unter den Handelsnamen Solsperse^{®}, z.B. Solsperse^{®} 22000, 24000SC, 26000, 27000 von Avecia erhältlich. Ferner sind polyetherhaltige Dispergiermittel z.B. unter den Handelsnamen Disparlon^{®} DA234 und DA325 der Firma Kusumoto Chemicals bekannt. Auch Polyurethan basierte Systeme sind geeignet. Polyurethan-basierte Systeme sind unter dem Handelsnamen EFKA^{®} 4046, EFKA^{®} 4047 von Ciba Specialty Chemicals erhältlich. Texaphor^{®} P60 und P63 sind entsprechende Handelsnamen der Cognis.

Die Menge des IR-Absorbers im Dispergiermittel beträgt 0,2 Gew.-% bis 80,0 Gew-%, bevorzugt 1,0 Gew.-% - 40,0 Gew-%, weiter bevorzugt 5 Gew-% - 35 Gew-%, und am stärksten bevorzugt 10 Gew-% - 30 Gew-% bezogen auf die erfindungsgemäß eingesetzte Dispersion des anorganischen IR-Absorbers. In der Gesamtzusammensetzung der gebrauchsfertigen IR-Absorberformulierung können neben dem IR-Absorber-Reinstoff und dem Dispergiermittel noch weitere Hilfsstoffe wie zum Beispiel Zirkoniumdioxid sowie Restlösemittel wie zum Beispiel Toluol, Benzol oder ähnliche aromatische Kohlenwasserstoffe enthalten sein.

Im Falle der Wolframate liegt hinsichtlich des Wolframatgehalts in den erfindungsgemäßen Polymer-Zusammensetzungen keinerlei Beschränkung vor. Üblicherweise werden die Wolframate aber in einer Menge von 0,0001 Gew.-% - 10,0000 Gew.-%, bevorzugt 0,0010 Gew.-% - 1,0000 Gew.-% und besonders bevorzugt 0,0020 Gew.-% - 0,1000 Gew.-% berechnet als Feststoffanteil an Wolframat oder an Zink-dotiertem Wolframat in der Polymer-Gesamtzusammensetzung eingesetzt.

In einer besonderen Ausführungsform der Erfindung beträgt die eingesetzte Menge der erfindungsgemäßen Wolframate 0,0090 Gew.-% - 0,0200 Gew.-%, vorzugsweise 0,0120 Gew.-% bis 0,0180 Gew.-%, wiederum angegeben als Feststoffanteil an Wolframat in der Polymer-Gesamtzusammensetzung. Feststoffanteil an Wolframat meint in diesem Zusammenhang das Wolframat als Reinstoff und nicht eine Dispersion, Suspension oder andere Zubereitung, enthaltend den Reinstoff, wobei sich auch die folgenden Angaben für den Wolframatgehalt immer auf diesen Feststoffanteil beziehen, soweit nicht explizit anders angegeben.

Im Falle der Boride werden die Boride in einer Menge von 0,0015 Gew.-% - 0,0150 Gew.-%, bevorzugt 0,0020 Gew.-% - 0,0110 Gew.-% und besonders bevorzugt 0,0027 Gew.-% - 0,0080 Gew.-% berechnet als Feststoffanteil an Borid in der Polymer-Gesamtzusammensetzung eingesetzt. In einer besonderen Ausführungsform, die weitere Farbmittel enthalten kann, werden die Boride in einer Menge von bevorzugt 0,0035 Gew.-% bis 0,0085 Gew.-% und insbesondere bevorzugt 0,004 bis 0,008 Gew.% berechnet als Feststoffanteil an Borid in der Polymer-Gesamtzusammensetzung eingesetzt. Feststoffanteil an Borid meint in diesem Zusammenhang das Borid als Reinstoff und nicht eine Suspension oder andere Zubereitung, enthaltend den Reinstoff.

Diese Konzentrationen finden vorzugsweise Anwendung für Fertigteile mit Dicken von 2 mm - 8 mm, bevorzugt 3,5 mm - 7,0 mm, und besonders bevorzugt 4 mm - 6 mm.

In weiteren besonderen Ausführungsformen, insbesondere für Anwendungen bei Schienen- und Luftfahrzeugen, kann die Dicke der Verscheibungen auch mehr als 8 mm, vorzugsweise 9 mm - 15 mm betragen, wobei hierbei die Konzentration der entsprechenden IR-Absorber und Stabilisatoren entsprechend angepaßt wird.

Cäsiumwolframat kann mit IR-Absorbern, insbesondere bevorzugt anorganischen IR-Absorbern in Form von Gemischen untereinander verwendet werden. So sind im Falle von Mischungen Zusammensetzungen bevorzugt, die zwei bis einschließlich fünf und besonders bevorzugt zwei oder drei unterschiedliche IR-Absorber enthalten.

In den Gemischen sind die IR-Absorber vorzugsweise ausgewählt aus der Gruppe der Wolframate der Boride und der Zinnoxide, besonders bevorzugt neben Cäsiumwolframat Zink-dotiertes Cäsiumwolframat, LaB₆ oder Antimon dotiertes Zinnoxid oder Indiumzinnoxid.

Die IR-Absorber können so zusammengestellt werden, daß ein maximaler Absorptionsbereich durch die Maxima der einzelnen IR-Absorber abgedeckt wird.

Geeignete zusätzliche organische Infrarot-Absorber sind nach Stoffklassen z.B. in M. Matsuoka, Infrared Absorbing Dyes, Plenum Press, New York, 1990 beschrieben. Besonders geeignet sind Infrarot-Absorber aus den Klassen der Phthalocyanine, der Naphthalocyanine, der Metallkomplexe, der Azofarbstoffe, der Anthraquinone, der Quadratsäurederivate, der Immoniumfarbstoffe, der Perylene, der Quaterylene sowie der Polymethine. Davon sind ganz besonders Phthalocyanine und Naphthalocyanine geeignet.

Aufgrund der verbesserten Löslichkeit in Thermoplasten sind Phthalocyanine und Naphthalocyanine mit sterisch anspruchsvollen Seitengruppen vorzuziehen, wie beispielsweise Phenyl, Phenoxy, Alkylphenyl, Alkylphenoxy, tert-Butyl, (-S-Phenyl), -NH-Aryl, -NH-Alkyl und ähnliche Gruppen.

Weiterhin können Verbindungen wie Indiumoxid, das mit 2 bis 30 Atom%, vorzugsweise mit 4 bis 12 Atom% Zinn (ITO) oder mit 10 bis 70 Atom% Fluor dotiert ist, zugesetzt werden.

Besonders bevorzugt ist die Kombination mit Zinnoxid als weiterem IR-Absorber, welches mit 2 bis 60 Atom% Antimon (ATO) oder mit 10 bis 70 Atom% Fluor dotiert ist.

Ferner ist Zinkoxid besonders geeignet, das mit 1 bis 30 Atom%, vorzugsweise mit 2 bis 10 Atom% Aluminium oder mit 2 bis 30 Atom% Indium oder mit 2 bis 30 Atom% Gallium dotiert ist.

Mischungen der oben genannten Infrarot-Absorber sind besonders geeignet, da der Fachmann durch eine gezielte Auswahl eine Optimierung der Absorption im nahen Infrarotbereich erreichen kann.

In einer weiteren Ausführungsform wird der IR-Absorber vor der Einarbeitung in die thermoplastische Polymermatrix mit der erfindungsgemäßen Stabilisatorkombination oder einer Mischung enthaltend die erfindungsgemäße Stabilisatorkombination vermischt.

Die Herstellung und Eigenschaften von Phosphinverbindungen sind dem Fachmann bekannt und beispielsweise in der EP-A 0 718 354 und "Ullmanns Enzyklopädie der Technischen Chemie", 4. Aufl., Bd. 18, S. 378-398 und Kirk-Othmer, 3. Aufl., Bd. 17, S. 527-534 beschrieben.

In einer bevorzugten Ausführungsform enthält die erfindungsgemäße Polymer-Zusammensetzung weiterhin einen Ultraviolett-Absorber. Zum Einsatz in der erfindungsgemäßen Polymer-Zusammensetzung geeignete Ultraviolett-Absorber sind Verbindungen, die eine möglichst geringe Transmission unterhalb 400 nm und eine möglichst hohe Transmission oberhalb von 400 nm besitzen. Derartige Verbindungen und deren Herstellung sind literaturbekannt und sind beispielsweise in den EP-A 0 839 623, WO-A 96/15102 und EP-A 0 500 496 beschrieben. Für den Einsatz in der erfindungsgemäßen Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin^{®} 234, Ciba Spezialitätenchemie, Basel), 2-(2'-Hydroxy-5'-(tert.-octyl)-phenyl)-benzotriazol (Tinuvin^{®} 329, Ciba Spezialitätenchemie, Basel), 2-(2'-Hydroxy-3'-(2-butyl)-5'-(tert.butyl)-phenyl)-benzotriazol (Tinuvin^{®} 350, Ciba Spezialitätenchemie, Basel), Bis-(3-(2H-benztriazolyl)-2-hydroxy-5-tert.-octyl)methan, (Tinuvin^{®} 360, Ciba Spezialitätenchemie, Basel), (2-(4,6-diphenyl-1,3,5-triazin-2-yl)-5-(hexyloxy)-phenol (Tinuvin^{®} 1577, Ciba Spezialitätenchemie, Basel), sowie der Benzophenone 2,4-Dihydroxy-benzophenon (Chimasorb^{®} 22 , Ciba Spezialitätenchemie, Basel) und 2-Hydroxy-4-(octyloxy)-benzophenon (Chimassorb^{®} 81, Ciba, Basel), 2-Propenoic acid, 2-cyano-3,3-diphenyl-, 2,2-bis[[(2-cyano-1-oxo-3,3-diphenyl-2-propenyl)oxy]-methyl]-1,3-propanediyl ester (9CI) (Uvinul^{®} 3030, BASF AG Ludwigshafen), 2-[2-hydroxy-4-(2-ethylhexyl)oxy]phenyl-4,6-di(4-phenyl)phenyl-1,3,5-triazine (CGX UVA 006, Ciba Spezialitätenchemie, Basel) oder Tetra-ethyl-2,2'-(1,4-phenylene-dimethylidene)-bismalonate (Hostavin^{®} B-Cap, Clariant AG).

Es können auch Mischungen dieser Ultraviolett-Absorber eingesetzt werden.

Hinsichtlich der Menge des in der Zusammensetzung enthaltenen Ultraviolett-Absorbers liegen keine besonderen Beschränkungen vor, solange die gewünschte Absorption von UV-Strahlung sowie eine ausreichende Transparenz des aus der Zusammensetzung hergestellten Formkörpers gewährleistet sind. Gemäß einer bevorzugten Ausführungsform der Erfindung enthält die Zusammensetzung Ultraviolett-Absorber in einer Menge von 0,05 Gew.-% bis 20,00 Gew.-%, insbesondere von 0,07 Gew.-% bis 10,00 Gew.-% und ganz besonders bevorzugt von 0,10 Gew.-% bis 1,00 Gew.-%, bezogen auf die Gesamtzusammensetzung.

Transparente thermoplastische Kunststoffe im Sinne der Erfindung sind z.B. Polymerisate von ethylenisch ungesättigten Monomeren und/oder Polykondensate von bifunktionellen reaktiven Verbindungen. Beispiele für transparente thermoplastische Polymere sind z.B. Polycarbonate oder Copolycarbonate auf Basis von Diphenolen, Poly- oder Copolyacrylate und Poly- oder Copolymethacrylate wie z.B. Poly- oder Copolymethylmethacrylate (wie PMMA) sowie Copolymere mit Styrol wie z.B. transparentes Polystyrolacrylnitril (PSAN) oder Polymere auf der Basis von Ethylen und/oder Propylen sowie aromatische Polyester wie Polyethylenterephthalat (PET), Polybutylenterephthalat (PBT), Polyethylennaphthalat (PEN) oder Polyethlylenterephthalat-Cyclohexandimethanol-Copolymer (PETG) , transparente thermoplastische Polyurethane und Polystyrole. Ferner können auch Polymere auf Basis von zyklischen Olefinen (z.B. TOPAS® , ein Handelsprodukt der Firma Ticona) eingemischt werden.

Auch Mischungen von mehreren transparenten thermoplastischen Polymeren sind möglich.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Polycarbonate im Sinne der vorliegenden Erfindung sind sowohl Homopolycarbonate als auch Copolycarbonate; die Polycarbonate können in bekannter Weise linear oder verzweigt sein.

Die Herstellung der Polycarbonate erfolgt in bekannter Weise aus Diphenolen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne', BAYER AG, "Polycarbonates" in Encyclopedia of Polymer Science and Engineering, Volume 11, Second Edition, 1988, Seiten 648-718 und schliesslich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha - alpha '-Bis-(hydroxyphenyl)-diisopropylbenzole, Phtalimidine abgeleitet von Isatin- oder Phenolphthaleinderivaten sowie deren kernalkylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hdydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate wird nur ein Diphenol eingesetzt, im Fall der Copolycarbonate werden mehrere Diphenole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind sowohl Monophenole als auch Monocarbonsäuren. Geeignete Monophenole sind Phenol selbst, Alkylphenole wie Kresole, p-tert.-Butylphenol, Cumylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol, 2,4,6-Trijodphenol, p-Jodphenol, sowie deren Mischungen.

Bevorzugte Kettenabbrecher sind Phenol, Cumylphenol und/oder p-tert.-Butylphenol.

Geeignete Monocarbonsäuren sind weiterhin Benzoesäure, Alkylbenzoesäuren und Halogenbenzoesäuren.

Bevorzugte Kettenabbrecher sind ferner die Phenole welche ein oder mehrfach mit C1 bis C30-Alkylresten, linear oder verzweigt, bevorzugt unsubstituiert oder mit tert.-Butyl substituiert sind.

Die Menge an einzusetzendem Kettenabbrecher beträgt bevorzugt 0,1 bis 5 Mol%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri(4-hydroxyphenyl)-heptan, 1,3,5-Tri(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenylisopropyl)-phenol, 2,6-Bis-(2-hydroxy-5'-methyl-benzyl)-4-methylphenol, 2-(4-hydroxyphenyl)-2-(2,4-dihydroxyphenyl)-propan, Hexa-(4(4-hydroxyphenylisopropyl)-phenyl)-orthoterephthalsäureester, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol% bis 2,00 Mol%, bezogen wiederum auf Mole an jeweils eingesetzten Diphenolen.

Die Verzweiger können entweder mit den Diphenolen und den Kettenabbrechern in der wässrig alkalischen Phase vorgelegt werden, oder in einem organischen Lösungsmittel gelöst vor der Phosgenierung zugegeben werden. Im Fall des Umesterungsverfahrens werden die Verzweiger zusammen mit den Diphenolen eingesetzt.

Die aromatischen Polycarbonate der vorliegenden Erfindung besitzen Gewichtsmittelmolekulargewichte Mw (ermittelt durch Gelpermeationschromatographie und Eichung mit Polycarbonateichung) zwischen 5000 und 200.000, vorzugsweise zwischen 10.000 und 80.000 und besonders bevorzugt zwischen 15.000 und 40.000 (dies entspricht in etwa zwischen 12.000 und 330.000, vorzugsweise zwischen 20.000 und 135.000 und besonders bevorzugt zwischen 28.000 und 69.000 ermittelt durch Eichung mittels Polystyrolstandard).

Die erfindungsgemäßen Polycarbonate können nach jedem bekannten Verfahren hergestellt werden, z.B. durch das Phasengrenzflächenverfahren oder durch das Schmelzeumsterungsverfahren, wobei aber Polycarbonate aus dem Phasengrenzflächenverfahren bevorzugt sind.

Die erfindungsgemäßen Polymer-Zusammensetzungen können neben den erfindungsgemäßen Stabilisatoren optional noch weitere übliche Polymeradditive enthalten, wie z.B. die in EP-A 0 839 623, WO-A 96/15102, EP-A 0 500 496 oder "Plastics Additives Handbook", Hans Zweifel, 5th Edition 2000, Hanser Verlag, München) beschriebenen Entformungsmittel, Flammschutzmittel, Farbmittel, oder optische Aufheller in den für die jeweiligen Thermoplasten üblichen Mengen, wobei von den genannten optional enthaltenen weiteren üblichen Polymeradditiven Farbmittel in einer speziellen Ausführungsform der Erfindung besonders bevorzugt sind.

Bevorzugt werden die weiteren Polymeradditive in Mengen von 0 Gew.-% bis zu 5 Gew.-%, weiter bevorzugt 0,1 Gew.-% bis 1,0 Gew.-%, jeweils bezogen auf die Menge der jeweiligen Polymer-Gesamtzusammensetzungen eingesetzt. Auch Mischungen mehrerer Zusatzstoffe sind geeignet.

In einer besonderen Ausführungsform der vorliegenden Erfindung ist die Polymerzusammensetzung frei von Phosphaten, Phosphorsäure, Phosphorsäurederivaten oder entsprechende Stabilisatoren, die diese Verbindungen beinhalten oder bilden können.

Farbmittel oder Pigmente im Sinne der vorliegenden Erfindung sind, Schwefel-haltige Pigmente wie Cadmium Red and Cadmium Gelb, Eisencyanid basierte Pigmente wie Berliner Blau, Oxid-Pigmente wie Titandioxid, Zinkoxid, rotes Eisenoxid, schwarzes Eisenoxid, Chromoxid, Titangelb, Zink-Eisen basiertes Braun, Titan-Cobalt basiertes Grün, Cobaltblau, Kupfer-Chrom basiertes Schwarz und Kupfer-Eisen basiertes Schwarz oder Chrom-basierte Pigmente wie Chromgelb, Phthalocyanin-abgeleitete Farbstoffe wie Kupfer-Phthalocyanin Blau and Kupfer Phthalocyanin Grün, kondensierte polycyclische Farbstoffe und Pigmente wie Azo-basierende (z.B. Nickel-Azogelb), Schwefel-Indigo-Farbstoffe, Perynon-basierte, Perylene-basierte, Chinacridonabgeleitete, Dioxazin-basierte, Isoindolinon-basierte und Chinophthalon-abgeleitete Derivate, Anthrachinon-basierte, heterocyclische Systeme.

Konkrete Beispiele für Handelsprodukte sind z.B. MACROLEX^{®} Blau RR, MACROLEX^{®} Violett 3R, MACROLEX^{®} Violett B (Lanxess AG, Deutschland), Sumiplast^{®} Violett RR, Sumiplast^{®} Violett B, Sumiplast^{®} Blau OR, (Sumitomo Chemical Co., Ltd.), Diaresin^{®} Violett D, Diaresin^{®} Blau G, Diaresin^{®} Blau N (Mitsubishi Chemical Corporation), Heliogen^{®} Blau oder Hellogen^{®} Grün (BASF AG, Deutschland).

Von diesen sind Cyaninderivate, Chinolinderivate, Anthrachinonderivate, Phthalocyaninderivate bevorzugt.

Besonders geeignete Entformungsmittel für die erfindungsgemäßen Zusammensetzung sind z.B. Pentaerythrittetrastearat (PETS) oder Glycerinmonostearat (GMS) sowie deren Carbonate und Mischungen dieser Entformungsmittel.

Methoden zur Herstellung der erfindungsgemäßen Polymer-Zusammensetzungen sind dem Fachmann bekannt.

Die Herstellung der erfindungsgemäßen Polymer-Zusammensetzungen enthaltend einen thermoplastischen Kunststoff und einen IR-Absorber, mindestens Cäsiumwolframat, ggf. anorganische IR-Absorber aus der Gruppe der Wolframate, der Zink-dotierten Wolframverbindungen oder der Boride, sowie die erfindungsgemäße Stabilisatorkombination sowie optional weitere übliche Polymeradditive erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind.

Insbesondere können hierbei die IR-Absorber, Thermostabilisatoren, Ultraviolett-Absorber und sonstigen Additive der erfindungsgemäßen Zusammensetzung durch bekannte Verfahren oder als Masterbatch eingebracht werden.

Die Verwendung von Masterbatchen ist insbesondere zum Einbringen des IR-Absorbers in Verbindung mit der Stabilisatorkombination bevorzugt, wobei insbesondere Masterbatche auf Basis von Polycarbonat verwendet werden, in die die IR-Absorber in Form einer gebrauchsfertigen IR-Absorberformulierung enthaltend Dispergiermittel, vorzugsweise Polyacrylat-, Polyether- oder Polyester-basierte Dispergiermittel, hiervon vorzugsweise hochtemperaturstabile Dispergiermittel, wie einem Polyacrylat (Homo- oder Copolymer), wie z.B. Polymethylmethacrylat, und/oder Polyester oder deren Mischungen, weiterhin enthaltend Hilfsstoffe wie zum Beispiel Zirkoniumdioxid und ggf. Restlösemittel wie zum Beispiel Toluol, Benzol oder ähnliche aromatische Kohlenwasserstoffe eingetragen worden sind. Durch Verwendung dieser Masterbatche in Kombination mit den entsprechenden IR-Absorberformulierungen wird eine Agglomeration des IR-Absorbers in der Polymerzusammensetzung wirksam verhindert.

In diesem Zusammenhang kann die Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

In einer besonderen Ausführungsform wird der erfindungemäße IR-Absorber, mindestens Cäsiumwolframat, vor der Einarbeitung in die thermoplastische Polymermatrix optional mit dem erfindungsgemäßen Phosphinstabilisator oder einer Mischung enthaltend eine erfindungsgemäße Phosphinverbindung gemeinsam mit einem Phosphit und/oder einem phenolischen Antioxidans oder einer Mischung aus den beiden letztgenannten Verbindungen zu einem Masterbatch vermischt, wobei die Vermischung bevorzugt in der Schmelze unter Einwirkung von Scherkräften (zum Beispiel in einem Kneter oder Zweischneckenextruder) stattfindet. Dieses Verfahren bietet den Vorteil, daß der IR-Absorber auch schon während des Compoundierens geschützt und eine Schädigung desselben vermieden wird. Zur Herstellung des Masterbatches wird als Polymermatrx bevorzugt der thermoplastische Kunststoff gewählt, der auch die Hauptkomponente der letztlichen Polymer-Gesamtzusammensetzung darstellt.

Der so hergestellte Masterbatch enthält
C.1: 85,000 Gew.-% - 98,895 Gew.-%, bevorzugt 93,00 Gew.-% - 98,895 Gew.-% eines transparenten thermoplastischen Kunststoffs;
C.2: 0,100 Gew.-% - 2,000 Gew.-% IR-Absorber, bevorzugt als anorganischen IR-Absorber, mindestens Cäsiumwolframat, und
C.3: 1,000 Gew.-% - 4,800 Gew.-% Dispergiermittel,
C.4: 0,005 Gew.-%- 1,000 Gew.-%, weiter bevorzugt 0,010 Gew.-% - 0,500 Gew.-%, besonders bevorzugt 0,050 Gew.% der erfindungsgemäßen Stabilisatorkombination
C.5: optional 0,000 - 8,000 Gew.-% mindestens eines weiteren Hilfsstoffs und/oder Additivs, wie z. B. Zirkondioxid,
wobei sich die Summe der Komponenten C.1 -C.5 zu 100 Gew.-% addiert.

In einer bevorzugten Ausführungsform liegt der anorganische IR-Absorber in Verbindung mit der erfindungsgemäßen Stabilisatorkombination in einer Acrylat- Matrix vor. In einer weiteren bevorzugten Ausführungsform ist der transparente thermoplastische Kunststoff ein Polycarbonat.

Die erfindungsgemäßen Polymer-Zusammensetzungen können zu Erzeugnissen oder Formkörpern verarbeitet werden, in dem man beispielsweise die Polymer-Zusammensetzungen zunächst wie beschrieben zu Granulat extrudiert und dieses Granulat durch geeignete Verfahren zu verschiedenen Erzeugnissen oder Formkörpern in bekannter Weise verarbeitet.

Die erfindungsgemäßen Zusammensetzungen können in diesem Zusammnhang beispielsweise durch Heißpressen, Spinnen, Blasformen, Tiefziehen, Extrudieren oder Spritzgiessen in Erzeugnisse oder Formkörper, geformte Gegenstände wie Spielzeugteile, Fasern, Folien, Bändchen, Platten wie Massivplatten, Stegplatten, Doppelstegplatten oder Wellplatten, Gefäße, Rohre oder sonstige Profile, überführt werden. Von Interesse ist auch die Verwendung von Mehrschichtsystemen. Das Aufbringen kann zugleich oder unmittelbar nach der Formgebung des Grundkörpers geschehen, z.B. durch Coextrusion oder Mehrkomponentenspritzguss. Das Aufbringen kann aber auch auf den fertig geformten Grundkörper geschehen, z.B. durch Lamination mit einem Film oder durch Beschichtung mit einer Lösung.

Platten aus Basis- und optionaler Deckschicht / optionalen Deckschichten werden jedoch bevorzugt durch (Co)extrusion hergestellt.

Zur Extrusion wird die gegebenenfalls z.B. mittels Trocknung vorbehandelte Polymer-Zusammensetzung dem Extruder zugeführt und im Plastifizierungssystem des Extruders aufgeschmolzen. Die Kunststoffschmelze wird dann durch eine Breitschlitzdüse oder eine Stegplattendüse gedrückt und dabei verformt, im Walzenspalt eines Glättkalanders in die
C.2: 0,100 Gew.-% - 2,000 Gew.-% IR-Absorber, bevorzugt als anorganischen IR-Absorber, und
C.3: 1,000 Gew.-% - 4,800 Gew.-% Dispergiermittel
C.4: 0,005 Gew.-%- 1,000 Gew.-%, weiter bevorzugt 0,010 Gew.-% - 0,500 Gew.-%, besonders bevorzugt 0,050 Gew.% der erfindungsgemäßen Stabilisatorkombination
C.5: optional 0,000 - 8,000 Gew.-% mindestens eines weiteren Hilfsstoffs und/oder Additivs, wie z. B. Zirkondioxid,
wobei sich die Summe der Komponenten C.1 -C.5 zu 100 Gew.-% addiert.

In einer bevorzugten Ausführungsform liegt der anorganische IR-Absorber in Verbindung mit der erfindungsgemäßen Stabilisatorkombination in einer Acrylat- Matrix vor. In einer weiteren bevorzugten Ausführungsform ist der transparente thermoplastische Kunststoff ein Polycarbonat.

Die erfindungsgemäßen Polymer-Zusammensetzungen können zu Erzeugnissen oder Formkörpern verarbeitet werden, in dem man beispielsweise die Polymer-Zusammensetzungen zunächst wie beschrieben zu Granulat extrudiert und dieses Granulat durch geeignete Verfahren zu verschiedenen Erzeugnissen oder Formkörpern in bekannter Weise verarbeitet.

Die erfindungsgemäßen Zusammensetzungen können in diesem Zusammnhang beispielsweise durch Heißpressen, Spinnen, Blasformen, Tiefziehen, Extrudieren oder Spritzgiessen in Erzeugnisse oder Formkörper, geformte Gegenstände wie Spielzeugteile, Fasern, Folien, Bändchen, Platten wie Massivplatten, Stegplatten, Doppelstegplatten oder Wellplatten, Gefäße, Rohre oder sonstige Profile, überführt werden. Von Interesse ist auch die Verwendung von Mehrschichtsystemen. Das Aufbringen kann zugleich oder unmittelbar nach der Formgebung des Grundkörpers geschehen, z.B. durch Coextrusion oder Mehrkomponentenspritzguss. Das Aufbringen kann aber auch auf den fertig geformten Grundkörper geschehen, z.B. durch Lamination mit einem Film oder durch Beschichtung mit einer Lösung.

Platten aus Basis- und optionaler Deckschicht / optionalen Deckschichten werden jedoch bevorzugt durch (Co)extrusion hergestellt.

Zur Extrusion wird die gegebenenfalls z.B. mittels Trocknung vorbehandelte Polymer-Zusammensetzung dem Extruder zugeführt und im Plastifizierungssystem des Extruders aufgeschmolzen. Die Kunststoffschmelze wird dann durch eine Breitschlitzdüse oder eine Stegplattendüse gedrückt und dabei verformt, im Walzenspalt eines Glättkalanders in die gewünschte endgültige Form gebracht und durch wechselseitige Kühlung auf Glättwalzen und der Umgebungsluft formfixiert. Es werden die zur Extrusion der Polymer-Zusammensetzung notwendigen Temperaturen eingestellt, wobei üblicherweise den Herstellerangaben gefolgt werden kann. Enthalten die Polymerzusammensetzungen beispielsweise Polycarbonate mit hoher Schmelzeviskosität, so werden diese normalerweise bei Schmelzetemperaturen von 260 °C bis 350 °C verarbeitet, entsprechend werden die Zylindertemperaturen des Plastifizierzylinders sowie die Düsentemperaturen eingestellt.

Durch Einsatz von einem oder mehreren Seitenextrudern und einer Mehrkanal-Düse oder gegebenenfalls geeigneten Schmelzeadaptern vor einer Breitschlitzdüse lassen sich thermoplastische Schmelzen verschiedener Zusammensetzung übereinander legen und somit mehrschichtige Platten oder Folien erzeugen (für die Coextrusion siehe beispielsweise EP-A 0 110 221, EP-A 0 110 238 und EP-A 0 716 919, für Details des Adapter- und Düsenverfahrens siehe Johannaber/Ast:"Kunststoff- Maschinenführer", Hanser Verlag, 2000 und in Gesellschaft Kunststofftechnik: "Coextrudierte Folien und Platten: Zukunftsperspektiven, Anforderungen, Anlagen und Herstellung, Qualitätssicherung", VDI-Verlag, 1990).

Erfindungsgemäß bevorzugte Erzeugnisse oder Formkörper sind Platten, Folien, Verscheibungen, beispielsweise Autofenster, Fenster von Schienen- und Luftfahrzeugen, Autosonnendächer, Panoramadächer, Bedachungen oder Gebäudeverglasungen, die die erfindungsgemäßen Zusammensetzungen enthalten. Dabei können neben Massivplatten auch Doppelstegplatten oder Multistegplatten verwendet werden. Als weitere Komponenten der erfindungsgemäßen Erzeugnisse neben den erfindungsgemäßen Zusammensetzungen können beispielsweise weitere Werkstoffteile in den erfindungsgemäßen Erzeugnissen enthalten sein. Beispielsweise können Verscheibungen Dichtungsmaterialen am Rand der Verscheibungen aufweisen. Bedachungen können beispielsweise Metallkomponenten wie Schrauben, Metallstifte oder ähnliches aufweisen, die zur Befestigung oder Führung (bei Falt- oder Schiebedächern) der Bedachungselemente dienen können. Ferner können weitere Materialien mit den erfindungsgemäßen Zusammensetzungen verbunden werden, z.B. im 2-Komponenten-Spritzguss. So kann das entsprechende Bauteil mit IR-absorbierenden Eigenschaften mit einem Rand versehen werden, welcher z.B. dem Verkleben dient.

Die Artikel enthaltend die Polymer-Zusammensetzung der vorliegenden Erfindung haben Trübungswerte (unbewittert) von weniger als 4 %, bevorzugt weniger als 3 %, weiter bevorzugt weniger als 2,5 %, und besonders bevorzugt 2 %, wobei schon ein Wert von weniger als 4 % keiner deutlichen Trübung entspricht. Trübungswerte sind hierbei auf eine Anfangstrübung nicht gealterter Produkte bezogen.

Darüber hinaus weisen die Artikel einen T_{DS} Wert von bevorzugt < 80 % auf (T_{DS} : Direct Solar Transmittance; Werte werden gemessen an optischen Farbmusterplatten mit einer Dicke von 4 mm. Die Berechnung der Gesamttransmission T_{DS} wird nach ISO 13837, computational convention "A" durchgeführt).

In einer besonderen Ausführungsform werden die Artikel aus der Zusammensetzung der vorliegenden Erfindung beschichtet. Diese Beschichtung dient dem Schutz des thermoplastischen Materials gegenüber allgemeinen Witterungseinflüssen (z.B. Schädigung durch Sonnenlicht) sowie gegenüber mechanischer Beeinträchtigung der Oberfläche (z.B. Verkratzen) und erhöht somit die Beständigkeit der entsprechend ausgerüsteten Artikel.

Es ist bekannt, dass Polycarbonat gegenüber UV-Strahlung mittels verschiedener Beschichtungen geschützt werden kann. Üblicherweise enthalten diese Beschichtungen UV-Absorber. Diese Schichten erhöhen ebenso die Kratzfestigkeit des entsprechenden Artikels. Die Artikel aus der vorliegenden Erfindung können Einschicht oder Mehrschichtsysteme tragen. Sie können ein- oder beidseitig beschichtet sein. In einer bevorzugten Ausführungsform enthält der Artikel einen Kratzfestlack enthaltend UV-Absorber. In einer besonderen Ausführungsorm enthält das Mehrschichterzeugnis mindestens eine Schicht enthaltend die erfindungsgemäße Zusammensetzung, mindestens eine UV-Schutzschicht und optional eine Kratzfestbeschichtung.

Bei Verscheibungsmaterialien trägt der Artikel mindestens eine Kratzfest- bzw. Antireflexbeschichtung auf mindestens einer Seite.

Die Herstellung der Beschichtung, z.B. einer Anti-Reflexbeschichtung, kann über verschiedene Methoden erfolgen. Beispielsweise kann über verschiedene Methoden des Aufdampfens, z.B. über Elektronenstrahlverfahren, Widerstandserhitzung sowie über Plasmaabscheidung oder verschiedener Sputtermethoden wie Hochfrequenz-Sputtern, Magnetron-Sputtern, Ionenstrahl-Sputtern usw., Ionenplattieren mittels DC-, RF-, HCD-Methoden, Reaktiv-Ionenplattieren usw. oder chemischer Gasphasenabscheidung eine Beschichtung erfolgen. Ferner kann eine Antireflexbeschichtung auch aus Lösung aufgebracht werden. So kann über eine Dispersion eines Metalloxids mit hohen Brechungsindex wie ZrO₂, TiO₂ Sb₂O₅ oder WO₃ in einen Silicon-basierten Lack eine entsprechende Beschichtungslösung hergestellt werden, welche zur Beschichtung von Kunstoffartikeln geeignet ist und thermisch oder UV-gestützt ausgehärtet werden kann.

Es sind verschiedene Methoden bekannt, um eine Kratzfestbeschichtung auf Kunststoffartikeln herzustellen. Beispielsweise können Epoxy-, Acryl-, Polysiloxan-, kolloidales Kieselgel-, oder anorganisch/organisch (Hybridsysteme) basierte Lacke verwendet werden. Diese Systeme können beispielsweise über Tauchverfahren, Spincoating, Sprühverfahren, oder Fließbeschichtung aufgebracht werden. Die Aushärtung kann thermisch oder mittels UV-Bestrahlung erfolgen. Es können Ein- oder Mehrschichtsysteme verwendet werden. Die Kratzfestbeschichtung kann z.B. direkt oder nach Vorbereitung der Substratoberfläche mit einer Grundierung (Primer) aufgetragen werden. Ferner kann eine Kratzfestbeschichtung über Plasma-gestützte Polymerisationsverfahren aufgebracht werden, z.B. über ein SiO₂-Plasma. Antibeschlags- oder Antireflex-Beschichtungen können ebenfalls über Plasmaverfahren hergestellt werden. Weiterhin ist es möglich, über bestimmte Spritzgussverfahren, wie z.B. das Hinterspritzen von oberflächenbehandelten Folien, eine Kratzfestbeschichtung auf den resultierenden Formkörper aufzubringen. In der Kratzfestschicht können verschiedene Additive, wie z.B. UV-Absorber, abgeleitet z.B. von Triazolen oder Triazinen, vorhanden sein. Ferner können IR-Absorber organischer oder anorganischer Natur enthalten sein. Diese Additive können im Kratzfestlack selbst oder in der Primerschicht enthalten sein. Die Dicke der Kratzfestschicht beträgt 1 µm, - 20 µm, bevorzugt 2 µm, - 15 µm .Unterhalb von 1 µm ist die Beständigkeit der Kratzfestschicht ungenügend. Oberhalb von 20 µm treten häufiger Risse im Lack auf. Das erfindungsgemäße Basismaterial, welches in der vorliegenden Erfindung beschrieben wird, wird bevorzugt nach Fertigstellung des Spritzgussartikels mit einer oben beschriebenen Kratzfest- und/oder Antireflexschicht versehen, da der bevorzugte Einsatzbereich im Bereich von Fenster- oder- Automobilverscheibung liegt.

Für Polycarbonate wird bevorzugt ein UV-Absorber enthaltener Primer eingesetzt, um die Haftung des Kratzfestlackes zu verbessern. Der Primer kann weitere Stabilisatoren wie z.B. HALS-Systeme (Stabilisatoren auf Basis sterisch gehinderter Amine), Haftvermittler, Fließhilfsmittel enthalten. Das jeweilige Harz kann aus einer Vielzahl von Materialien ausgewählt werden und ist z.B. in Ullmann's Encylopedia of Industrial Chemistry, 5th Edition, Vol. A18, pp. 368-426, VCH, Weinheim 1991 beschrieben. Es können Polyacrylate, Polyurethane, Phenol-basierte, Melaminbasierte, Epoxy- und Alkyd-Systeme oder Mischungen dieser Systeme eingesetzt werden. Das Harz wird meist in geeigneten Lösemitteln gelöst - häufig in Alkoholen. Abhängig vom gewählten Harz kann die Aushärtung bei Raumtemperatur oder bei erhöhten Temperaturen erfolgen. Bevorzugt werden Temperaturen zwischen 50°C und 130°C eingesetzt - häufig nach dem ein Großteil des Lösemittels kurzzeitig bei Raumtemperatur entfernt wurde. Kommerziell erhältliche Systeme sind z.B. SHP470, SHP470FT2050 und SHP401 der Firma Momentive Performance Materials. Derartige Beschichtungen sind z.B. in US 6350512 B1, US 5869185, EP 1308084, WO 2006/108520 beschrieben.

Kratzfest-Lacke (Hard-Coat) sind bevorzugt aus Siloxanen aufgebaut und enthalten bevorzugt UV-Absorber. Sie werden bevorzugt über Tauch- oder Fließverfahren aufgebracht. Die Aushärtung erfolgt bei Temperaturen von 50°C - 130°C. Kommerziell erhältliche Systeme sind z.B. AS4000, SHC5020 und AS4700 von Momentive Performance Materials. Derartige Systeme sind z.B. in US 5041313, DE 3121385, US 5391795, WO 2008/109072 beschrieben. Die Synthese dieser Materialien erfolgt meist über Kondensation von Alkoxy- und/oder Alkylakoxysilanen unter Säure- oder Basenkatalyse. Optional können Nanopartikel eingearbeitet werden. Bevorzugte Lösemittel sind Alkohole wie Butanol, Isopropanol, Methanol, Ethanol und deren Mischungen.

Anstatt von Primer / Kratzfestbeschichtungs-Kombinationen können Einkomponenten-Hybrid-Systeme eingesetzt werden Diese sind z.B. in EP0570165 oder WO 2008/071363 oder DE 2804283 beschrieben. Kommerziell erhältlich Hybrid-Systeme sind z.B. unter den Namen PHC587 oder UVHC 3000 von Momentive Performance Materials erhältlich.

### Beispiele

Im Folgenden wird die Erfindung anhand von Ausführungsbeispielen näher beschrieben, wobei die hier beschriebenen Bestimmungsmethoden für alle korrespondierenden Größen in der vorliegenden Erfindung zur Anwendung kommen, sofern nichts Gegenteiliges beschrieben worden ist.

Die Bestimmung des Schmelzvolumenrate (MVR) erfolgt nach ISO 1133 (bei 300 °C; 1,2 kg).

Bestimmung des T_{DS}-Wertes (Direct Solar Transmittance):
Die Transmissions- und Reflexionsmessungen wurden an einem Perkin Elmer Lambda 900 Spektralphotometer mit Photometerkugel durchgeführt (d.h. Bestimmung der Gesamttransmission sowohl durch Messung der diffusen und direkten Transmission als auch der diffusen und direkten Reflektion). Alle Werte wurden von 320 nm bis 2300 nm bestimmt.

Die Berechnung der Gesamttransmission T_{DS} wurde nach ISO 13837, computational convention "A" durchgeführt.

Die Thermolagerung der Proben erfolgt in einem Umluftofen. Die Thermolagerung erfolgte bei 110 °C bzw. 120 °C. Die Veränderung der TDS-Werte (ΔTDS = TDS_{528 h/1000 h} - TDS_{0 h}) ist in Tabelle 1 gezeigt. Aus den gemessenen Werten wurde die prozentuale Veränderung der entsprechenden Werte bezogen auf TDS₀ₕ berechnet. Die Ergebnisse sind in Tabelle 2 dargestellt.

Zur Herstellung der Probekörper wird additivfreies Polycarbonat Makrolon^{®} 2608 (lineares Bisphenol-A Polycarbonat) der Firma Bayer MaterialScience mit einem Schmelzvolumenindex (MVR) von 12 cm³/10 min bei 300 °C und 1,2 kg Belastung gemäß ISO 1133 verwendet.

Die Compoundierung der Additive erfolgte auf einem Zweiwellenextruder der Firma KrausMaffei Berstorff TYP ZE25 bei einer Gehäusetemperatur von 260°C bzw. einer Massetemperatur von 270°C und einer Drehzahl von 100 Upm mit den in Beispielen angegebenen Mengen an Additiven.

Das Granulat wird bei 120 °C für 3 Stunden im Vakuum getrocknet und anschließend auf einer Spritzgussmaschine vom Typ Arburg 370 mit einer 25-Spritzeinheit bei einer Massetemperatur von 300°C und einer Werkzeugtemperatur von 90 °C zu Farbmusterplatten mit den Abmessungen 60 mm x 40 mm x 4 mm verarbeitet.

Als IR-Absorber wird eine Cäsiumwolframat (Cs_{0,33}WO₃)-Dispersion, (YMDS 874 der Firma Sumitomo Metal Mining, Japan, Acrylat-Dispersion) eingesetzt, wobei der Feststoffgehalt an Cäsiumwolframat in der Dispersion 25 Gew.-% beträgt. Die Gewichtsangaben in den Beispielen beziehen sich auf das Cäsiumwolframat als Reinstoff.

Als weiterer IR-Absorber wird ein Zink-dotiertes Cäsiumwolframat Zn_{w}Cs_{0,33}WO₃ (w = 0,001 - 0,015) eingesetzt, wobei der Feststoffgehalt an dotiertem Cäsiumwolframat in der Dispersion 25 Gew.-% beträgt. Die Gewichtsangaben in den Beispielen beziehen sich auf das Zink-dotierte Cäsiumwolframat als Reinstoff.

Bevorzugt ist das Gewichtsverhältnis von Cs_{0.33}WO₃ zu ZnO im dotierten Wolframat 77,4 : 22,6.

Als Stabilisatoren zur Stabilisierung des anorganischen IR-Absorbers wurden folgende Verbindungen eingesetzt:
T1: Triphenylphosphin (TPP, Sigma-Aldrich, 82018 Taufkirchen, Deutschland)
T2: Irgafos® 168 (CAS 31570-04-4) BASF AG; Ludwigshafen
T3: Irganox® 1076 (CAS 2082-79-3); BASF AG; Ludwigshafen)
T4: Irgafos® PEP-Q (Tetrakis(2,4-di-tert.-butylphenyl)[1,1-biphenyl]-4,4-diylbisphosphit; BASF AG; Ludwigshafen )

### Beispiel 1 (Vergleichsbeispiel)

Makrolon^{®} 2608 wird mit 0,015 Gew.-% Cäsiumwolframat, Cs_{0,33}WO₃, (entspricht 0,060 Gew.-% YMDS 874-Dispersion) wie oben beschrieben compoundiert. Die Ergebnisse der Thermolagerung sind in Tabelle 1 aufgeführt.

### Beispiel 2 (Vergleichsbeispiel)

Makrolon^{®} 2608 wird mit 0,015 Gew.-% Zink-dotiertem Cäsiumwolframat, , (entspricht 0,060 Gew.-% Zink-dotiertem Cäsiumwolframat-Dispersion) wie oben beschrieben compoundiert. Die Ergebnisse der Thermolagerung sind in Tabelle 1 aufgeführt.

### Beispiel 3 (Vergleichsbeispiel)

Makrolon^{®} 2608 wird mit 0,015 Gew.-% Cäsiumwolframat, Cs_{0,33}WO₃, (entspricht 0,060 Gew.-% YMDS 874-Dispersion) sowie 0,050 Gew-% Triphenylphosphin (T1) unter oben beschriebenen Bedingungen versetzt.

### Beispiel 4 (Vergleichsbeispiel)

Makrolon^{®} 2608 wird mit 0,015 Gew.-% Zink-dotiertem Cäsiumwolframat (entspricht 0,060 Gew.-% Zink-dotiertem Cäsiumwolframat-Dispersion) sowie 0,050 Gew-% Triphenylphosphin (T1) wie oben beschrieben compoundiert. Die Ergebnisse der Thermolagerung sind in Tabelle 1 aufgeführt.

### Beispiel 5 (Vergleichsbeispiel)

Makrolon^{®} 2608 wird mit 0,015 Gew.-% Cäsiumwolframat, Cs_{0,33}WO₃, (entspricht 0,060 Gew.-% YMDS 874-Dispersion) sowie 0,1 Gew-% Irgafos® PEP-Q (T4) unter oben beschriebenen Bedingungen versetzt.

### Beispiel 6 (Erfindungsgemäß)

Makrolon^{®} 2608 wird mit 0,015 Gew.-% Cäsiumwolframat, Cs_{0,33}WO₃, (entspricht 0,060 Gew.-% YMDS 874-Dispersion) sowie 0,050 Gew-% Triphenylphosphin (T1) sowie 0,040 Gew-% Irgafos^{®} 168 (T2) und 0,010 Gew-% Irganox® 1076 (T3) unter oben beschriebenen Bedingungen versetzt.

### Beispiel 7 (Erfindungsgemäß)

Makrolon^{®} 2608 wird mit 0,015 Gew.-% Zink-dotiertem Cäsiumwolframat (entspricht 0,060 Gew.-% Zink-dotiertem Cäsiumwolframat-Dispersion) sowie 0,050 Gew-% Triphenylphosphin (T1) sowie 0,040 Gew-% Irgafos® 168 (T2) und 0,010 Gew-% Irganox® 1076 (T3) wie oben beschrieben compoundiert.

**Tabelle 1: Veränderung der IR-Eigenschaften nach Thermolagerung (Thermolagerung soweit nicht anders angegeben bei 110 °C)**

| Beispiel Nr. | Eingesetzter Stabilisator | ΔT_{DS} (528 h; Soweit nicht anders angegeben) | ΔT_{DS} (1000 h) |
|---|---|---|---|
| 1 | - | 5,4 | 6,2 |
| (Vergleich) | | | |
| 2 | - | 4,9 | 5,6 |
| (Vergleich) | | | |
| 3 | T1 | 2,0 | 2,4 |
| (Vergleich) | | 2,4 (120°C) | 5,4 (120°C) |
| 4 | T1 | 0,8 | 0,9 |
| (Vergleich) | | 1,1 (120°C) | 4,8 (120°C) |
| 5 | T4 | 9,6 | 14,0 |
| (Vergleich) | | 15 ; 120°C) | 18,7 (120 °C) |
| 6 | T1/T2/T3 | 1,0 (110°C) | 1,2 (110°C) |
| (Erfindungsgemäß) | | 1,5 (120°C) | 2,8 (120°C) |
| 7 | T1 / T2 / T3 | 0,9 (110°C) | 1,1 (110°C) |
| (Erfindungsgemäß) | | 1,3 (120°C) | 1,8 (120°C) |

**Tabelle 2: Veränderung der IR-Eigenschaften nach Thermolagerung in % (soweit nicht anders angegeben bei 110 °C)**

| Beispiel Nr. | Eingesetzter Stabilisator | ΔT_{DS} (528 h; soweit nicht anders angegeben) [%] | ΔT_{Ds} (1000 h) [%] |
|---|---|---|---|
| 1 (Vergleich) | - | 9,3 | 10,7 |
| 2 (Vergleich) | - | 8,3 | 9,7 |
| 3 | T1 | 3,7 | 4,3 |
| (Vergleich) | | 4,3 (120°C) | 9,6 (120°C) |
| 4 | T1 | 1,2 | 1,6 |
| (Vergleich) | | 1,9 (120°C) | 8,4 (120°C) |
| 5 | T4 | 20,1 | 29,6 |
| (Vergleich) | | 31,8 (; 120 °C) | 39,7 (120 °C) |
| 6 | T1/T2/T3 | 1,9 (110°C) | 2,1 (110°C) |
| (Erfindungsgemäß) | | 2,6 (120°C) | 4,9 (120°C) |
| 7 | T1/T2/T3 | 1,6 (110°C) | 1,9 (110°C) |
| (Erfindungsgemäß) | | 2,3 (120°C) | 3,2 (120°C) |

Der Zusatz von Stabilisator T1 führt sowohl bei herkömmlichen Cäsiumwolframat als auch bei dem Zink-dotiertem Cäsiumwolframat zu einem stabileren Verhalten über die Zeit. Allerdings ist bei hoher Temperaturbelastung und bei hohen Lagerzeiten eine deutlicher Verlust an IR-Absorptionsleistung erkennbar. Der Zusatz anderer herkömmlich für Thermoplaste eingesetzter Stabilisatoren führt überraschenderweise zu einem destabilisierenden Verhalten (Beispiel 5). Dies war überraschend und konnte nicht erwartet werden.

Der T_{DS}-Wert der erfindungsgemäßen Zusammensetzungen erhöht sich nach Thermolagerung deutlich weniger gegenüber dem Ausgangswert vor Thermolagerung als der der Vergleichsbeispiele, was eine bessere IR-Absorptionseigenschaft nach der Thermolagerung bedeutet.

Die Beispiele 6 und 7 zeigen, dass durch die Kombinationen von anorganischen IR-Absorber mit einer Stabilisatorkombination aus erfindungsgemäßem Phosphin, Phosphit und phenolischem Antioxidanz die Stabilität des IR-Absorbers auch bei erhöhten Lagertemperaturen (120°C / 1000 h) signifikant verbessern lässt. Der T_{DS}-Wert der erfindungsgemäßen Zusammensetzungen erhöht sich nach Thermolagerung deutlich weniger gegenüber dem Ausgangswert vor Thermolagerung als der der Vergleichsbeispiele, was eine bessere IR-Absorptionseigenschaft nach der Thermolagerung bedeutet.

## Patentansprüche

1. Zusammensetzung enthaltend
a. mindestens einen IR-Absorber, wobei als IR-Absorber Cäsiumwolframat enthalten ist,
b. eine Stabilisatorkombination zur Stabilisierung von IR-Absorbern, enthaltend
a) 30 Gew.-% - 67 Gew.-% mindestens eines Stabilisators auf Phosphinbasis,
b) 30 Gew.-% - 67 Gew.-% mindestens eines Stabilisators auf Phosphitbasis und
c) 2 Gew.-% - 20 Gew.-% mindestens eines Stabilisators aus der Gruppe der phenolischen Antioxidantien,
wobei sich die Summe der Komponenten a)-c) der Stabilisatorkombination zu 100 Gew.-% addiert, und
c. optional mindestens einen im sichtbaren Bereich des elektromagnetischen Spektrums transparenten thermoplastischen Kunststoff.

2. Zusammensetzung nach Anspruch 1, **dadurch gekennzeichnet, dass** das Gewichtsverhältnis von Phosphin (a) zum Gemisch aus Phosphit und phenolischem Antioxidans (b+c) bevorzugt 8:1 bis 1:9 beträgt, wobei das Gewichtsverhältnis von Phosphit-Stabilisator (b) zu phenolischem Antioxidans (c) von 1:5 bis 10:1 beträgt.

3. Zusammensetzung nach Anspruch 1 oder 2, **dadurch gekennzeichnet, dass** das Phosphin ausgewählt ist aus der Gruppe, die Triphenylphosphin (TPP), Trialkylphenylphosphin, Bisdiphenylphosphinoethan und Trinaphthylphosphin umfasst.

4. Zusammensetzung nach einem der vorhergehenden Ansprüche, **dadurch gekennzeichnet, dass** das Phosphit ausgewählt ist aus der Gruppe, die Tris(2,4-di-tert-butyl-phenyl)-phosphit, Triphenylphosphit und Tri(nonylphenyl)phosphit umfasst.

5. Zusammensetzung nach einem der vorhergehenden Ansprüche, **dadurch gekennzeichnet, dass** das phenolische Antioxidans ausgewählt ist aus der Gruppe, die 2,6-Di-tert-butyl-4-(octadecanoxycarbonylethyl)phenol und Tetrakis-(methylen-(3,5-di-(tert)-butyl-4-hydroxyzimtsäure))methan umfasst.

6. Zusammensetzung nach einem der vorhergehenden Ansprüche, **dadurch gekennzeichnet, dass** der Anteil der Stabilisatorkombination in der Gesamtzusammensetzung, enthaltend mindestens einen im sichtbaren Bereich des elektromagnetischen Spektrums transparenten thermoplastischen Kunststoff, 0,001 Gew.-% - 0,500 Gew.-% beträgt.

7. Zusammensetzung nach Anspruch 6, **dadurch gekennzeichnet, dass** der Infrarotabsorber in einer Menge von 0,0001 Gew.-% - 10,0000 Gew.-%, bezogen auf die Gesamtzusammensetzung, enthalten ist.

8. Zusammensetzung nach Anspruch 6, **dadurch gekennzeichnet, dass** der IR-Absorber ein Zink-dotiertes Cäsiumwolframat ist.

9. Zusammensetzung nach Anspruch 6, **dadurch gekennzeichnet, dass** das im sichtbaren Bereich des elektromagnetischen Spektrums transparente thermoplastische Material ein Polycarbonat ist.

10. Zusammensetzung nach einem der Ansprüche 6 - 9, **dadurch gekennzeichnet, dass** die Zusammensetzung als weiteren Bestandteil mindestens eine Verbindung aus der Gruppe der Ultraviolett-Absorber, Farbmittel, Entformer und Flammschutzmittel enthält.

11. Verwendung einer Zusammensetzung nach Anspruch 1 zur Herstellung von Platten, Automobil- Schienenfahrzeug-, Luftfahrzeug- und Architekturverscheibungen.

## Claims

1. Composition comprising
a. at least one IR absorber, caesium tungstate being present as IR absorber,
b. a stabilizer combination for stabilizing IR absorbers, comprising
a) 30 wt.% - 67 wt% of at least one stabilizer based on phosphine,
b) 30 wt.% - 67 wt.% of at least one stabilizer based on phosphite, and
c) 2 wt.% - 20 wt.% of at least one stabilizer from the group of phenolic antioxidants
the sum of components a) - c) of the stabilizer combination adding up to 100 wt.%,
and
c. optionally at least one thermoplastic which is transparent in the visible range of the eletromagnetic spectrum.

2. Composition according to claim 1, **characterized in that** the weight ratio of phosphine (a) to the mixture of phosphite and phenolic antioxidant (b+c) is preferably 8:1 to 1:9, the weight ratio of phosphite stabilizer (b) to phenolic antioxidant (c) being from 1:5 to 10:1.

3. Composition according to claim 1 or 2, **characterized in that** the phosphine is chosen from the group which includes triphenylphosphine (TPP), trialkylphenylphosphine, bisdiphenylphosphino-ethane, trinaphthylphosphine.

4. Composition according to one of the preceding claims, **characterized in that** the phosphite is chosen from the group which includes tris(2,4-di-tert-butyl-phenyl) phosphite, triphenyl phosphite and tri(nonylphenyl) phosphite.

5. Composition according to one of the preceding claims, **characterized in that** the phenolic antioxidant is chosen from the group which includes 2,6-di-tert-butyl-4-(octadecanoxycarbonylethyl)phenol and tetrakis-(methylene-(3,5-di-(tert)-butyl-4-hydroxycinnamic acid))methane.

6. Composition according to one of the preceding claims, **characterized in that** the content of the stabilizer combination in the total composition containing at least one thermoplastic which is transparent in the visible range of the electromagnetic spectrum is 0.001 wt.% - 0.500 wt.%.

7. Composition according to claim 6, **characterized in that** it contains the infra-red absorber in an amount of 0.0001 wt.% - 10.0000 wt.%, based on the total composition.

8. Composition according to claim 6, **characterized in that** the IR absorber is a zinc-doped caesium tungstate.

9. Composition according to claim 6, **characterized in that** the thermoplastic material which is transparent in the visible range of the electromagnetic spectrum is a polycarbonate.

10. Composition according to one of claims 6 - 9, **characterized in that** the composition contains at least one compound from the group of ultraviolet absorbers, colouring agents, mould release agents and flameproofing agents as a further constituent.

11. Use of a composition according to claim 1 for the production of sheets and automobile, track vehicle, aircraft and architectural glazing.

## Revendications

1. Composition contenant
a. au moins un absorbant des IR, du tungstate de césium étant contenu comme absorbant des IR,
b. une combinaison de stabilisant pour la stabilisation des absorbants des IR, contenant
a) 30% en poids-67% en poids d'au moins un stabilisant à base de phosphine,
b) 30% en poids-67% en poids d'au moins un stabilisant à base de phosphite,
c) 2% en poids-20% en poids d'au moins un stabilisant du groupe des antioxydants phénoliques,
la somme des composants a)-c) de la combinaison de stabilisant valant 100% en poids et
c. éventuellement au moins un matériau synthétique thermoplastique transparent dans la plage visible du spectre électromagnétique.

2. Composition selon la revendication 1, **caractérisée en ce que** le rapport pondéral de phosphine (a) au mélange de phosphite et d'antioxydant phénolique (b+c) vaut de préférence 8:1 à 1:9, le rapport pondéral de stabilisant à base de phosphite (b) à antioxydant phénolique (c) valant 1:5 à 10:1.

3. Composition selon la revendication 1 ou 2, **caractérisée en ce que** la phosphine est choisie dans le groupe qui comprend la triphénylphosphine (TPP), la trialkylphénylphosphine, le bisdiphénylphosphinoéthane et la trinaphtylphosphine.

4. Composition selon l'une quelconque des revendications précédentes, **caractérisée en ce que** le phosphite est choisi dans le groupe qui comprend le phosphite de tris(2,4-di-tert-butylphényle), le phosphite de triphényle et le phosphite de tri(nonylphényle).

5. Composition selon l'une quelconque des revendications précédentes, **caractérisée en ce que** l'antioxydant phénolique est choisi dans le groupe qui comprend le 2,6-di-tert-butyl-4-(octadécanoxycarbonyléthyl)phénol et le tétrakis-(méthylène-(3,5-di-(tert)-butyl-4-hydroxycinnamate))méthane.

6. Composition selon l'une quelconque des revendications précédentes, **caractérisée en ce que** la proportion de combinaison de stabilisant dans la composition globale, contenant au moins un matériau synthétique thermoplastique transparent dans la plage visible du spectre électromagnétique, est de 0,001% en poids-0,500% en poids.

7. Composition selon la revendication 6, **caractérisée en ce que** l'absorbant des infrarouges est contenu en une quantité de 0,0001% en poids-10,0000% en poids, par rapport à la composition totale.

8. Composition selon la revendication 6, **caractérisée en ce que** l'absorbant des IR est un tungstate de césium dopé au zinc.

9. Composition selon la revendication 6, **caractérisée en ce que** le matériau synthétique thermoplastique transparent dans la plage visible du spectre électromagnétique est un polycarbonate.

10. Composition selon l'une quelconque des revendications 6-9, **caractérisée en ce que** la composition contient, comme autre constituant, au moins un composé du groupe des absorbants des ultraviolets, des colorants, des agents de démoulage et des agents ignifuges.

11. Utilisation d'une composition selon la revendication 1, pour la fabrication de plaques, de vitrages pour automobiles, véhicules ferroviaires, avions et architecturaux.
